# EUROPÄISCHE PATENTANMELDUNG

(11) **EP 3 974 479 A1**
(43) Veröffentlichungstag der Anmeldung: **30.03.2022**
(21) Anmeldenummer: 20198985.2
(22) Anmeldetag: 29.09.2020
(51) Int. Cl.: C09D 5/02, C09D 7/61, C09D 7/40

(54) **WÄSSRIGER DISPERSIONSBESCHICHTUNGSSTOFF, BESCHICHTUNG ERHALTEN MIT DEM DISPERSIONSBESCHICHTUNGSSTOFF, BESCHICHTETES SUBSTRAT, VERWENDUNG DES DISPERSIONSBESCHICHTUNGSSTOFFS UND VERFAHREN ZUR BESCHICHTUNG VON SUBSTRATOBERFLÄCHEN**

(71) Anmelder: DAW SE, 64372 Ober-Ramstadt (DE)
(72) Erfinder: BEFURT, Uwe, 64372 Ober-Ramstadt (DE); BRENNER, Thomas, 64367 Mühltal (DE)
(74) Vertreter: Metten, Karl-Heinz

(57) **Zusammenfassung**

Die vorliegende Erfindung betrifft einen wässrigen Dispersionsbeschichtungsstoff enthaltend a1) ein Bindemittel, z.B. in Form einer wässrigen (Meth)acrylat-Homopolymer/Siliciumdioxid-Hybrid-Dispersion, b) Wasserglas oder Kieselsol, c) einen silikatischen Füllstoff mit mindestens bimodaler Partikelgrößenverteilung, d) ein wasserlösliches Alkylsilikonat, e) einen Verdicker, f) ein Hydrophobierungsmittel und gegebenenfalls g) Additive, wobei der wässrige Dispersionsbeschichtungsstoff einen pH-Wert im Bereich von 8,5 bis 12 aufweist. Ferner betrifft die Erfindung eine Beschichtung, erhalten mit dem erfindungsgemäßen wässrigen Dispersionsbeschichtungsstoff, sowie ein Substrat, das mit der erfindungsgemäßen Beschichtung versehen ist. Außerdem betrifft die Erfindung die Verwendung des erfindungsgemäßen wässrigen Dispersionsbeschichtungsstoffs für die Beschichtung von Substratoberflächen und für die Renovierung von Gebäudefassaden. Schließlich betrifft die Erfindung ein Verfahren zur Beschichtung von Substratoberflächen unter Verwendung des erfindungsgemäßen wässrigen Dispersionsbeschichtungsstoffs.

## Beschreibung

Die vorliegende Erfindung betrifft einen wässriger Dispersionsbeschichtungsstoff, eine Beschichtung, erhalten mit dem erfindungsgemäßen wässrigen Dispersionsbeschichtungsstoff, ein beschichtetes Substrat, enthaltend die erfindungsgemäße Beschichtung, die Verwendung des erfindungsgemäßen wässrigen Dispersionsbeschichtungsstoffs für die Beschichtung oder Renovierung von Gebäudefassaden sowie ein Verfahren zur Beschichtung von Substratoberflächen.

Dispersionsfarbe sind seit langem bekannt und werden sowohl im Innenbereich wie auch bei Fassaden eingesetzt. In beiden Fällen ist es ein stetes Bestreben, das Erscheinungsbild des ursprünglichen Anstrichs möglichst lange unverändert in hoher Qualität beizubehalten. Dies betrifft sowohl Maßnahmen gegen den Schimmel- und Algenbefall als auch das Kriterium der Farbtonstabilität, beispielsweise gegenüber UV-Strahlung. Das Erreichen der hohen Anforderungen, die an Beschichtungen gestellt werden, wird seit einiger Zeit noch dadurch erschwert, dass man idealerweise ohne herkömmliche Konservierungsmittel auskommen soll bzw. auszukommen hat.

Robuste Farbanstriche sollen gemäß der EP 2 942 376 B1 durch Verwendung einer Dispersionsfarbe erhalten werden, enthaltend 10 bis 60 Gew.-% Bindemittel und 40 bis 90 Gew.-% Hartfüllstoffe, wobei die Hartfüllstoffe unterschiedliche Teilchengrößen besitzen und in einer zumindest bimodalen Teilchengrößenverteilung vorliegen sollen und wobei diese Hartfüllstoffe zudem eine Mohs-Härte von mindestens 5 aufzuweisen haben.

Die aus dem Stand der Technik bekannten Lösungen lassen gleichwohl noch Wünsche offen. Der vorliegenden Erfindung lag daher die Aufgabe zugrunde, Beschichtungsstoffe zur Verfügung zu stellen, die nicht mehr mit den genannten Mängeln des Stands der Technik behaftet sind und die insbesondere schmutzresistente und/oder kratzfeste Beschichtungen liefern, und zwar vorzugsweise mit topfkonservierungsmitteifreien Systemen.

Demgemäß wurde ein wässriger Dispersionsbeschichtungsstoff gefunden, gebildet aus oder enthaltend
a) ein erstes Bindemittel a1) in Form einer wässrigen (Meth)acrylat-Homopolymer/Siliciumdioxid-Hybrid-Dispersion oder einer wässrigen (Meth)acrylat-Copolymer/Siliciumdioxid-Hybrid-Dispersion oder einer wässrigen (Meth)acrylat/(Meth)acrylsäure-Copolymer/Siliciumdioxid-Hybrid-Dispersion oder einer wässrigen Organosilikat-Hybridbindemittel-Dispersion und
   gegebenenfalls
   mindestens ein zweites Bindemittel a2) in Form einer wässrigen Dispersion, enthaltend (Meth)acrylat-Homopolymere oder enthaltend (Meth)acrylat-Copolymere oder enthaltend Vinylacetat/Ethylen-Copolymere oder enthaltend Vinylaromat/AcrylatCopolymere,
   und/oder
   mindestens ein drittes Bindemittel a3) bestehend aus oder umfassend Acrylharze, Acrylsilikonharze, Silikonharze, Urethanharze, ungesättigte Polyesterharze oder Alkydharze,
b) Wasserglas und/oder Kieselsol, insbesondere Wasserglas,
c) silikatischen Füllstoff mit mindestens bimodaler Partikelgrößenverteilung,
d) mindestens ein Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol, Trialkylsilanol oder beliebigen Mischungen hiervon und
e) mindestens einen Verdicker,
f) mindestens ein Hydrophobierungsmittel und
g) gegebenenfalls mindestens ein Additiv
wobei der wässrige Dispersionsbeschichtungsstoff einen pH-Wert im Bereich von 8,5 bis 12 aufweist oder auf einen pH-Wert im Bereich von 8,5 bis 12 eingestellt ist.

In einer besonders zweckmäigen Ausführungsform wird der erfindungsgemäße wässrige Dispersionsbeschichtungsstoff gebildet aus oder enthält
a) ein erstes Bindemittel a1) in Form einer wässrigen (Meth)acrylat-Homopolymer/Siliciumdioxid-Hybrid-Dispersion oder einer wässrigen (Meth)acrylat-Copolymer/Siliciumdioxid-Hybrid-Dispersion oder einer wässrigen (Meth)acrylat/(Meth)acrylsäure-Copolymer/Siliciumdioxid-Hybrid-Dispersion oder einer wässrigen Organosilikat-Hybridbindemittel-Dispersion und
   mindestens ein zweites Bindemittel a2) in Form einer wässrigen Dispersion, enthaltend (Meth)acrylat-Homopolymere oder enthaltend (Meth)acrylat-Copolymere oder enthaltend Vinylacetat/Ethylen-Copolymere oder enthaltend Vinylaromat/AcrylatCopolymere, und/oder, insbesondere und,
   mindestens ein drittes Bindemittel a3) bestehend aus oder umfassend Acrylharze, Acrylsilikonharze, Silikonharze, Urethanharze, ungesättigte Polyesterharze oder Alkydharze,
b) Wasserglas und/oder Kieselsol, insbesondere Wasserglas,
c) silikatischen Füllstoff mit mindestens bimodaler Partikelgrößenverteilung,
d) mindestens ein Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol, Trialkylsilanol oder beliebigen Mischungen hiervon und
e) mindestens einen Verdicker,
f) mindestens ein Hydrophobierungsmittel und
g) gegebenenfalls mindestens ein Additiv
wobei der wässrige Dispersionsbeschichtungsstoff einen pH-Wert im Bereich von 8,5 bis 12 aufweist oder auf einen pH-Wert im Bereich von 8,5 bis 12 eingestellt ist.

Die erfindungsgemäßen wässrigen Dispersionsbeschichtungsstoffe enthalten bevorzugt neben dem mindestens einen ersten Bindemittel a1) zusätzlich auch das mindestens eine zweite Bindemittel a2) und/oder das mindestens eine dritte Bindemittel a3), wobei die Bindemittelkombinationen a1) und a2), a1) und a3) sowie a1), a2) und a3) möglich sind. Unter diesen sind die Kombinationen a1) und a2) sowie a1), a2) und a3) bevorzugt.

Für viele Anwendungen hat es sich als besonders zweckmäßig zur Lösung der der Erfindung zugrunde liegenden Aufgabe erwiesen, für das erste Bindemittel a1) eine wässrige Acrylat-Copolymer/Siliciumdioxid-Hybrid-Dispersion oder eine Methaerylat/AcrylsäureCopolymer/Siliciumdioxid-Hybrid-Dispersion einzusetzen, wobei alternativ und insbesondere zusätzlich für das zweite Bindemittel a2) auf eine wässrige Dispersion, enthaltend Acrylat-Copolymere, zurückgegriffen werden kann. Ferner können alternativ und insbesondere zusätzlich für das dritte Bindemittel a3) Silikonharze eingesetzt werden.

In den wässrigen (Meth)acrylat-Homopolymer/Siliciumdioxid-, (Meth)acrylat-Copolymer/Siliciumdioxid- oder (Meth)acrylat/(Meth)acrylsäureCopolymer/Siliciumdioxid-Hybrid-Dispersionen liegen die (Meth)acrylat-Homopolymer/Siliciumdioxid-, (Meth)acrylat-Copolymer/Siliciumdioxid- bzw. (Meth)acrylal/(Meth)acrylsäure-Copolymer/Siliciumdioxid-Hybrid-Partikel vorzugsweise mit einer durchschnittlichen, insbesondere einer absoluten, Partikelgröße kleiner 1 µm vor.

Unter Organosilikat-Hybridbindemittel im Sinne der vorliegenden Erfindung sollen insbesondere auch Reaktionsprodukte gebildet aus mindestens einem organischen Bindemittel, ausgewählt aus der Gruppe bestehend aus Vinylacetat/Ethylen-Copolymeren, Copolymeren auf Basis von Vinylaromaten, insbesondere Styrol, und Acrylaten, Copolymeren auf Basis von Reinacrylaten und deren beliebige Mischungen, das in die Polymere oder Copolymere einpolymerisiert a) mindestens ein Monomer mit mindestens einem hydrolysierbaren Silan als funktioneller Gruppe, wobei diese funktionelle Gruppe nicht kettenverlängernd an der Polymerisationsreaktion teilnimmt, und/oder b) mindestens ein Monomer mit mindestens einer Hydroxygruppe als funktioneller Gruppe, wobei diese funktionelle Gruppe nicht kettenverlängernd an der Polymerisationsreaktion teilnimmt, enthält, und Kieselsol und/oder Wasserglas, insbesondere Wasserglas, verstanden werden. Ohne an eine Theorie gebunden zu sein, wird vermutet, dass die hydrolysierbare Silangruppe a) und/oder die Hydroxygruppe b) eine Kondensationsreaktion mit den funktionellen Gruppen des Kieselsols und/oder Wasserglases eingehen. Reinacrylate im Sinne der Erfindung umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein.

Der Anteil des ersten Bindemittels a1) (Feststoffanteil), bezogen auf die Gesamtmenge an Bindemitteln gemäß Komponente a) (Feststoffanteil), liegt bevorzugt im Bereich von 1 bis 15 Gew.-%, und besonders bevorzugt im Bereich von 2,5 bis 10 Gew.-%. Alternativ sowie insbesondere zusätzlich kann vorgesehen sein, dass der Anteil des zweiten Bindemittels a2) (Feststoffanteil), bezogen auf die Gesamtmenge an Bindemitteln gemäß Komponente a) (Feststoffanteil), bevorzugt im Bereich von 2 bis 15 Gew.-%, und besonders bevorzugt im Bereich von 3 bis 12 Gew.-%, liegt. Ferner kann alternativ sowie insbesondere zusätzlich vorgesehen sein, dass der Anteil des dritten Bindemittels a3) (Feststoffanteil), bezogen auf die Gesamtmenge an Bindemitteln gemäß Komponente a) (Feststoffanteil), bevorzugt im Bereich von 0,1 bis 5 Gew.-%, und besonders bevorzugt im Bereich von 0,5 bis 2,5 Gew.-%, liegt.

Die Gesamtmenge an Bindemitteln gemäß Komponente a) (Feststoffanteil), liegt zweckmäßigerweise im Bereich von 5 bis 40 Gew.-%, vorzugsweise im Bereich von 8 bis 35 Gew.-%, besonders bevorzugt 1 im Bereich von o bis 30 Gew.-% und insbesondere im Bereich von 15 bis 25 Gew.-%, an Komponente a), wobei beispielsweise auch auf Mengen im Bereich von 5 bis 25 Gew.-%, und bevorzugt im Bereich von 10 bis 20 Gew.-% zurückgegriffen werden kann. Der erfindungsgemäße Dispersionsbeschichtungsstoff verfügt in bevorzugten Ausführungsformen ferner über
h) mindestens ein pH-Wert-Einstellmittel,
i) mindestens ein Netz- und/oder Dispergiermittel,
j) Pigmente, insbesondere in Form einer Pigmentpaste,
k) nicht-silikatische Füllstoffe,
l) amorphe Polyphosphate, bevorzugt Natriumpolyphosphat wie Natriumhexametaphosphat,
m) Wasserglas-Stabilisatoren,
n) ein Lösemittel,
o) Oberflächenadditive, insbesondere Silikonoberflächenadditive, beispielsweise polyethermodifizierte Siloxane, wie polyethermodifiziertes Polymethylalkylsiloxan, oder Silikonpolyether-Copolymere und/oder
p) mindestens einen Nasshaftungspromotor.

Unter den geeigneten Verdickern wird vorzugsweise zurückgegriffen auf solche Verdicker ausgewählt aus der Gruppe bestehend aus Polyacrylat-Verdickern, insbesondere HASE-Polyacrylat-Verdickern, Polyurethan-Verdickern, Polyharnstoff-Verdickern, modifizierten Polyharnstoff-Verdickern, Polysaccharid-Verdickern, Polyvinylalkohol-Verdickern, Polyetherpolyol-Verdickern, Schichtsilikat-Verdickern, insbesondere organisch modifizierten Schichtsilikaten, und beliebigen Mischungen hiervon. Beispielsweise kann unter den Mischungen auf solche zurückgegriffen werden, die Polyurethan- und Polysaccharid-Verdicker, insbesondere Cellulose-Verdicker, enthalten.

Unter den geeigneten Polysaccharid-Verdickern wird vorzugsweise zurückgegriffen auf Xanthan und/oder einen Cellulose-Verdicker, insbesondere auf Basis von Hydroxyethylcellulose, hydrophob modifizierter Hydroxyethylcellulose, Methylhydroxyethylcellulose und/oder Methylcellulose. Selbstverständlich können auch beliebige Mischungen dieser Verdicker eingesetzt werden.

Die Komponente e) liegt in den erfindungsgemäßen wässrigen Dispersionbeschichtungsstoffen zweckmäßigerweise im Bereich von 0,05 bis 1,5 Gew.-%, vorzugsweise 0,1 bis 1,2Gew.-% und besonders bevorzugt 0,15 bis 1,0 Gew.-% vor.

Als wasserlösliches Alkylsilikonat der Komponente d) kommt insbesondere Kaliummethylsilikonat zum Einsatz. Die Komponente d) liegt in den erfindungsgemäßen wässrigen Dispersionbeschichtungsstoffen zweckmäßigerweise im Bereich von 0,05 bis 2.0 Gew.-%, vorzugsweise 0,1 bis 1,8 Gew.-% und besonders bevorzugt 0,4 bis 1,4 Gew.-% vor.

Das mindestens eine Netz- und/oder Dispergiermittel wird vorzugsweise ausgewählt aus der Gruppe bestehend aus Polycarboxylaten, insbesondere Salze von Polyacrylsäuren wie Natrium-, Kalium- oder Ammoniumpolyacrylate, Polyphosphaten, insbesondere lineare Polyphosphate und/oder zyklische Metaphosphate, Polyetherphosphaten, Polycarbonsäurepolymeren, Acrylblockcopolymeren, insbesondere CFRP-basierte Acrylblockcopolymere, EO/PO-Blockcopolymeren, vorzugsweise Ethylendiamin-EO/PO-Blockcopolymere, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxan, Alkindiolethoxylaten, Fluortensiden und beliebigen Mischungen hiervon.

Besonders geeignete Netz- und/oder Dispergiermittel stellen EO/PO-Blockcopolymere, vorzugsweise Ethylendiamin-EO/PO-Blockcopolymere, dar.

Die Komponente i) liegt in den erfmdungsgemäßen wässrigen Dispersionbeschichtungsstoffen zweckmäßigerweise im Bereich von 0 bis 2,0 Gew.-%, vorzugsweise 0,05 bis 1,5 Gew.-% und besonders bevorzugt 0,1 bis 1 Gew.-% vor.

Für den silikatischen Füllstoff greift man bevorzugt auf solche zurück, ausgewählt aus der Gruppe bestehend aus Glimmer, insbesondere Muskovitglimmer, Feldspate, Talk, Wollastonit, Kaolin, insbesondere kalziniertes Feldspate, Kaolin und/oder Feldspaten. Hierunter sind Albit als Feldspat und Muskovit als Glimmer sowie Kaolinbesonders bevorzugt. Silikatische Füllstoffe im Sinne der vorliegenden Erfindung umfassen ebenfalls - alternativ sowie insbesondere zusätzlich - silikatische Leichfüllstoffen. Unter diesen sind Perlite besonders bevorzugt. Die Komponente c) liegt in den erfindungsgemäßen wässrigen Dispersionbeschichtungsstoffen zweckmäßigerweise im Bereich von 5 bis 40 Gew.-%, vorzugsweise 10 bis 38 Gew.-% und besonders bevorzugt 15 bis 35 Gew.-% vor.

Hierbei kann die mindestens bimodale Partikelgrößenverteilung der Komponente c) zum Beispiel sowohl durch Kombination von mindestens zwei silikatischen Füllstoffen mit jeweils monomodaler Korngrößenverteilungen mit unterschiedlichen lokalen Maxima als auch durch den Einsatz mindestens eines silikatischen Füllstoffs mit bimodaler oder multimodaler Korngrößenverteilung erreicht werden. Multimodale Korngrößenverteilungen umfassen nicht nur bi- und trimodale Korngrößenverteilungen, sondern auch höhermodale Korngrößenverteilungen. Die Verwendung von mindestens zwei silikatischen Füllstoffen mit jeweils monomodaler Korngrößenverteilung ist regelmäßig bevorzugt.

Der silikatische Füllstoff mit mindestens bimodaler Partikelgrößenverteilung weist vorzugsweise mindestens ein erstes lokales Partikelgrößenmaximum im Bereich von 1 µm bis kleiner 22 µm, bevorzugt im Bereich von 2 µm bis 20 µm und besonders bevorzugt im Bereich von 5 µm bis 18 µm sowie mindestens ein zweites lokales Partikelgrößenmaximum im Bereich von 22 µm bis 100 µm, bevorzugt im Bereich von 25 µm bis 75 µm und besonders bevorzugt im Bereich von 28 µm bis 60 µm auf.

Kaolin wird in den erfindungsgemäßen Dispersionsbeschichtungsstoffen vorzugsweise mit einer durchschnittlichen Partikelgröße D₅₀ im Bereich von 1 µm bis 20 µm, bevorzugt im Bereich von 2 µm bis 15 µm und besonders bevorzugt im Bereich von 5 µm bis 13 µm eingesetzt. Alternativ sowie insbesondere zusätzlich kann vorgesehen sein, dass das Kaolin über eine Partikelgrößenverteilung D₉₀ im Bereich von 5 µm bis 30 µm, bevorzugt im Bereich von 10 µm bis 25 µm und besonders bevorzugt im Bereich von 12 µm bis 20 µm verfügt. Gemäß einer weiteren Ausführungsform kann alternativ sowie insbesondere zusätzlich vorgesehen sein, dass das Kaolin über eine Partikelgrößenverteilung D10 im Bereich von 0,1 µm bis 15 µm, bevorzugt im Bereich von 1 µm bis 10 µm und besonders bevorzugt im Bereich von 2 µm bis 8 µm verfügt. Kaolin kann in mono-, bi- oder multimodaler Partikelgrößenverteilung eingesetzt werden, wobei die monomodale Verteilung bei Verwendung einer Mischung an silikatischen Füllstoffen besonders zweckmäßig ist. Wird es mit mindestens einem weiteren silikatischen Füllstoff in den erfindungsgemäßen Dispersionsbeschichtungsstoffen eingesetzt, verfügt es bevorzugt über eine monomodale Partikelgrößenverteilung, vorausgesetzt, der weitere silikatische Füllstoff verfügt über eine monomodale Partikelgrößenverteilung mit einem anderen lokalen Maximum.

Feldspate werden in den erfindungsgemäßen Dispersionsbeschichtungsstoffen vorzugsweise mit einer durchschnittlichen Partikelgröße D₅₀ im Bereich von 5 µm bis 40 µm, bevorzugt im Bereich von 10 µm bis 30 µm und besonders bevorzugt im Bereich von 12 µm bis 20 µm eingesetzt. Alternativ sowie insbesondere zusätzlich kann vorgesehen sein, dass die Feldspate über eine Partikelgrößenverteilung D₉₀ im Bereich von 10 µm bis 100 µm, bevorzugt im Bereich von 20 µm bis 75 µm und besonders bevorzugt im Bereich von 30 µm bis 60 µm verfügt. Gemäß einer weiteren Ausführungsform kann alternativ sowie insbesondere zusätzlich vorgesehen sein, dass die Feldspate über eine Partikelgrößenverteilung D10 im Bereich von 0,1 µm bis 12 µm, bevorzugt im Bereich von 0,5 µm bis 8 µm und besonders bevorzugt im Bereich von 1 µm bis 5 µm verfügt. Feldspate können in mono-, bi- oder multimodaler Partikelgrößenverteilung eingesetzt werden. Für die erfindungsgemäßen Dispersionsbeschichtungsstoffe hat sich der Einsatz von solchen mit bimodaler Verteilung als besonders zweckmäßig erwiesen, wobei sich die der Erfindung zugrunde liegende Aufgabe auch bei Verwendung von Feldspaten mit monomodaler Verteilung lösen lässt. Wird es mit mindestens einem weiteren silikatischen Füllstoff in den erfindungsgemäßen Dispersionsbeschichtungsstoffen eingesetzt, verfügt es in einer zweckmäßigen Ausgestaltung über eine monomodale Partikelgrößenverteilung, vorausgesetzt, der weitere silikatische Füllstoff verfügt über eine monomodale Partikelgrößenverteilung mit einem anderen lokalen Maximum. Werden die weiteren silikatischen Füllstoff in den erfindungsgemäßen Dispersionsbeschichtungsstoffen in monomodaler Verteilung mit jeweils unterschiedlichen lokalen Maxima eingesetzt, hat es sich vielfach als vorteilhaft erwiesen, auf Feldspat mit bimodaler Teilchengrößenverteilung zurückzugreifen.

Perlite werden in den erfindungsgemäßen Dispersionsbeschichtungsstoffen vorzugsweise mit einer durchschnittlichen Partikelgröße D50 im Bereich von 10 µm bis 75 µm, bevorzugt im Bereich von 15 µm bis 50 µm und besonders bevorzugt im Bereich von 20 µm bis 40 µm eingesetzt. Alternativ sowie insbesondere zusätzlich kann vorgesehen sein, dass die Perlite über eine Partikelgrößenverteilung D90 im Bereich von 30 µm bis 120 µm, bevorzugt im Bereich von 40 µm bis 100 µm und besonders bevorzugt im Bereich von 60 µm bis 80 µm verfügen. Gemäß einer weiteren Ausführungsform kann alternativ sowie insbesondere zusätzlich vorgesehen sein, dass die Perlite über eine Partikelgrößenverteilung D10 im Bereich von 1 µm bis 30 µm, bevorzugt im Bereich von 3 µm bis 20 µm und besonders bevorzugt im Bereich von 6 µm bis 15 µm verfügen. Perlite können in mono-, bi- oder multimodaler Partikelgrößenverteilung eingesetzt werden, wobei die monomodale Verteilung bei Verwendung einer Mischung an silikatischen Füllstoffen besonders zweckmäßig ist. Werden sie mit mindestens einem weiteren silikatischen Füllstoff in den erfindungsgemäßen Dispersionsbeschichtungsstoffen eingesetzt, verfügen sie bevorzugt über eine monomodale Partikelgrößenverteilung, vorausgesetzt, der weitere silikatische Füllstoff verfügt über eine monomodale Partikelgrößenverteilung mit einem anderen lokalen Maximum.

Glimmer, insbesondere Muskovite, werden in den erfindungsgemäßen Dispersionsbeschichtungsstoffen vorzugsweise mit einer durchschnittlichen Partikelgröße D50 im Bereich von 10 µm bis 100 µm, bevorzugt im Bereich von 15 µm bis 80 µm und besonders bevorzugt im Bereich von 20 µm bis 70 µm eingesetzt. Alternativ sowie insbesondere zusätzlich kann vorgesehen sein, dass die Glimmer, insbesondere Muskovite, über eine Partikelgrößenverteilung D90 im Bereich von 50 µm bis 200 µm, bevorzugt im Bereich von 60 µm bis 175 µm und besonders bevorzugt im Bereich von 60 µm bis 120 µm verfügen. Gemäß einer weiteren Ausführungsform kann alternativ sowie insbesondere zusätzlich vorgesehen sein, dass die Glimmer, insbesondere Muskovite, über eine Partikelgrößenverteilung D10 im Bereich von 1 µm bis 40 µm, bevorzugt im Bereich von 3 µm bis 30 µm und besonders bevorzugt im Bereich von 6 µm bis 20 µm verfügen. Glimmer, insbesondere Muskovite, können in mono-, bi- oder multimodaler Partikelgrößenverteilung eingesetzt werden, wobei die monomodale Verteilung bei Verwendung einer Mischung an silikatischen Füllstoffen besonders zweckmäßig ist. Werden Glimmer, insbesondere Muskovite, mit mindestens einem weiteren silikatischen Füllstoff in den erfindungsgemäßen Dispersionsbeschichtungsstoffen eingesetzt, verfügen diese bevorzugt über eine monomodale PartikelgrößenVerteilung, vorausgesetzt, der weitere silikatische Füllstoff verfügt über eine monomodale Partikelgrößenverteilung mit einem anderen lokalen Maximum.

Der D50-Wert wird auch Halbwertskorngröße oder Medianwert genannt. Bei dem D50-Wert ist die Gewichtsmenge an Teilchen, die größer ist als der D50-Wert identisch mit der Menge an Teilchen, die kleiner ist als der D50-Wert. Bei dem D10-Wert beträgt die Gewichtsmenge an Teilchen, die kleiner ist als der D10-Wert 10 Prozent. Bei dem D90-Wert beträgt die Gewichtsmenge an Teilchen, die kleiner als der D90-Wert ist, 90 Prozent, bezogen auf das Gesamtgewicht der Partikel. Für die Bestimmung der D10-, D50- und D90-Werte kann auf die Vorschrift gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt werden. Für die Bestimmung der D50-Werte kann dabei z.B. auf den sogenannten Laser Scattering Particle Size Distribution Analyser, wie von der Firma Horiba unter der Gerätebezeichnung "LA 950 V2" erhältlich, zurückgegriffen werden.

Für die nicht-silikatischen Füllstoffe k) sind z.B. geeignet calcitische Füllstoffen, wie Calciumcarbonate, Dolomite, Calcite und/oder Aragonite, sulfatischen Füllstoffe, insbesondere Bariumsulfat, und/oder chemisch modifizierte Füllstoffe.

Die erfindungsgemäßen wässrigen Dispersionbeschichtungsstoffe können vorzugsweise carbonatische Füllstoffe in einer Menge kleiner 5,0 Gew.-%, bevorzugt kleiner 2,0 Gew.-% sowie besonders bevorzugt kleiner 1,0 Gew-%, jeweils bezogen auf das Gesamtgewicht des Dispersionbeschichtungsstoffes, enthalten oder im Wesentlichen frei von carbonatischen Füllstoffen sein.

Die Komponente k) liegt in den erfindungsgemäßen wässrigen Dispersionbeschichtungsstoffen zweckmäßigerweise im Bereich von 0 bis 10 Gew.-%, vorzugsweise 0,1 bis 8 Gew.-% und besonders bevorzugt 1 bis 5 Gew.-% vor.

Unter den Pigmente sind solche bevorzugt, die ausgewählt sind aus der Gruppe bestehend aus Titandioxid, Zinksulfid, Zinkoxid, Baryt, Ruß, Eisenoxid, Chromoxid, Kobaltblau, Phtalocyaninpigmenten, Spinellpigmenten, Nickel- und Chromtitanat, synthetischen Weißpigmenten mit Lufteinschlüssen sowie einer beliebigen Mischung hiervon.

Grundsätzlich kommen als geeignete Pigmente anorganische Pigmente wie Bunt-, Schwarz- und Weißpigmente (Farbpigmente) sowie Glanzpigmente und organische Pigmente wie Bunt- und Schwarzpigmente in Betracht. Pigmente im Sinne der vorliegenden Erfindung umfassen ebenfalls Opazifizierungsmittel, z.B. das kommerzielle Produkt Ropaque ^{®} der The Dow Chemical Company.

Unter den anorganischen Schwarzpigmenten kann zum Beispiel ausgewählt werden unter Eisenoxidschwarz, Eisen-Mangan-Schwarz, Spinellschwarz und/oder Ruß.

Unter den anorganischen Buntpigmenten kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Zweckmäßige Pigmente umfassen demgemäß zum Beispiel Titandioxid, Zinksulfid, Zinkoxid, Baryt, Ruß, Eisenoxid, Chromoxid, Kobaltblau, Spinellpigment, Nickeltitanat, Chromtitanat und deren beliebige Mischungen.

Besonders geeignete anorganische Buntpigmente umfassen z.B. C.I. Pigment Blue 28, C.I. Pigment Blue 29, C.I. Pigment Blue 36, C.I. Pigment Black 7, C.I. Pigment Black 11, C.I. Pigment Black 22, C.I. Pigment Black 26, C.I. Pigment Black 28, C.I. Pigment Black 30, C.I. Pigment Black 33, C.I. Pigment Brown 24, C.I. Pigment Brown 29, C.I. Pigment Brown 33, C.I. Pigment Brown 35, C.I. Pigment Green 17, C.I. Pigment Green 26, C.I. Pigment Green 50, C.I. Pigment Orange 82, C.I. Pigment Red 101, C.I. Pigment Violet 14, C.I. Pigment Violet 15, C.I. Pigment Violet 16, C.I. Pigment Violet 48, C.I. Pigment Red 259, C.I. Pigment Yellow 42, C.I. Pigment Yellow 53, C.I. Pigment Yellow 119, C.I. Pigment Yellow 159, C.I. Pigment Yellow 161, C.I. Pigment Yellow 162, C.I. Pigment Yellow 163, C.I. Pigment Yellow 164, C.I. Pigment Yellow 184, C.I. Pigment Yellow 216, C.I. Pigment Yellow 227 oder beliebige Mischungen dieser Pigmente.

Geeignete organische Buntpigmente umfassen z.B. C.I. Pigment Black 31, C.I. Pigment Black 32, C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, C.I Pigment Blue 16, C.I Pigment Blue 60, C.I. Pigment Brown 25, C.I Pigment Blue 80, C.I. Pigment Green 7, C.I. Pigment Green 36, C.I. Pigment Orange 34, C.I. Pigment Orange 36, C.I. Pigment Orange 43, C.I. Pigment Orange 62, C.I. Pigment Orange 73, C.I. Pigment Orange 74, C.I. Pigment Red 19, C.I. Pigment Red 112, C.I. Pigment Red 122, C.I. Pigment Red 168, C.I. Pigment Red 170, C.I. Pigment Red 177, C.I. Pigment Red 179, C.I. Pigment Red 187, C.I. Pigment Red 188, C.I. Pigment Red 202, C.I. Pigment Red 207, C.I. Pigment Red 214, C.I. Pigment Red 254, C.I. Pigment Red 255, C.I. Pigment Red 257, C.I. Pigment Red 264, C.I. Pigment Red 282, C.I. Pigment Violett 19, C.I. Pigment Violett 23, C.I. Pigment Violett 29, Pigment Yellow 3, Pigment Yellow 65, Pigment Yellow 74, Pigment Yellow 83, Pigment Yellow 97, C.I. Pigment Yellow 109, C.I. Pigment Yellow 110, C.I. Pigment Yellow 120, C.I. Pigment Yellow 138, C.I. Pigment Yellow 139, C.I. Pigment Yellow 151, C.I. Pigment Yellow 154, C.I. Pigment Yellow 155, C.I. Pigment Yellow 175, C.I. Pigment Yellow 194, C.I. Pigment Yellow 213, C.I. Pigment Yellow 219 oder beliebige Mischungen dieser Pigmente.

Die Komponente j) liegt in den erfindungsgemäßen wässrigen Dispersionbeschichtungsstoffen zweckmäßigerweise im Bereich von o bis 40 Gew.-%, vorzugsweise 1 bis 35 Gew.-% und besonders bevorzugt 5 bis 30 Gew.-% vor.

Besonders geeignete silikatische Leichtfüllstoffe können ausgewählt werden aus der Gruppe bestehend aus Glasbubbles, Blähglas, z.B. Blähglasgranulat; geblähten vulkanischen Gesteinen, insbesondere Perlite, z.B. hydrophobierte Perlite; expandierten Perliten; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten; Korkpartikeln und beliebigen Mischungen hiervon. Die erfindungsgemäßen wässrigen Dispersionsbeschichtungsstoffe können ferner alternativ oder zusätzlich Leichtfüllstoffe aus nachwachsenden Rohstoffen enthalten, insbesondere Kork.

Geeignete Additive gemäß Komponente g) können ausgewählt werden aus der Gruppe bestehend aus Entschäumern, Flammschutzmitteln, Schichtsilikaten, organisch modifizierten Schichtsilikaten, Puffersubstanzen, UV-Absorbern und Mischungen hiervon. Die Komponente g) liegt in den erfindungsgemäßen wässrigen Dispersionbeschichtungsstoffen zweckmäßigerweise im Bereich von o bis 5 Gew.-%, vorzugsweise 0,05 bis 3 Gew.-% und besonders bevorzugt 0,1 bis 1 Gew.-% vor.

Das Hydrophobierungsmittel umfasst vorzugsweise mit Aminoalkylgruppen derivatisierte Polydialkylsiloxane. Die Komponente f) liegt in den erfindungsgemäßen wässrigen Dispersionbeschichtungsstoffen zweckmäßigerweise im Bereich von 0,01 bis 2,5 Gew.-%, vorzugsweise 0,1 bis 2 Gew.-% und besonders bevorzugt 0,3 bis 1,5 Gew.-% vor.

Für das Lösemittel greift man bevorzugt auf aromatenfreies Testbenzin, Glykole, insbesondere Butyldiglykol und/oder 1-(2-Butoxy-1-methylethoxy)propan-2-ol, und/oder Polyalkylenglykole, insbesondere Polyethylenglykole, zurück. Die Komponente n) liegt in den erfindungsgemäßen wässrigen Dispersionbeschichtungsstoffen zweckmäßigerweise im Bereich von o bis 10 Gew.-%, vorzugsweise 0,05 bis 5 Gew.-% und besonders bevorzugt 0,5 bis 1,5 Gew.-% vor.

Von besonderem Vorteil ist auch, wenn in den erfindungsgemäßen wässrigen Dispersionbeschichtungsstoffen als Wasserglas Kalium-Wasserglas oder Lithium-Wasserglas vorliegt, wobei besonders bevorzugt Lithium-Wasserglas zum Einsatz kommt. Insbesondere auch durch den Einsatz von Lithium-Wasserglas können Ausblühungen mit den aus den erfindungsgemäßen wässrigen Dispersionsbeschichtungsstoffen erhältlichen Beschichtungen besonders wirksam reduziert sogar unterbunden werden. Die Komponente b) liegt in den erfindungsgemäßen wässrigen Dispersionbeschichtungsstoffen zweckmäßigerweise im Bereich von 0,1 bis 9 Gew.-%, vorzugsweise 0,3 bis 4 Gew.-% und besonders bevorzugt 0,5 bis 2 Gew.-% vor.

Geeignete Kandidaten als pH-Wert-Einstellmittel h) können ausgewählt werden aus der Gruppe bestehend aus Alkalihydroxiden, Erdalkalihydroxiden, Ammoniak, Aminverbindungen und beliebigen Mischungen hiervon. Das pH-Wert-Einstellmittel stellt bevorzugt ein Alkalihydroxid dar, wobei Kaliumhydroxid besonders bevorzugt ist. Die Komponente h) liegt in den erfindungsgemäßen wässrigen Dispersionbeschichtungsstoffen zweckmäßigerweise im Bereich von 0 bis 1,0 Gew.-%, vorzugsweise 0,05biso,7 Gew.-% und besonders bevorzugt 0,1bis 0,5 Gew.-% vor.

Bei dem Wasserglas-Stabilisator handelt es sich vorzugsweise um eine quartäre Ammoniumverbindung und/oder um ein Aminderivat. Selbstverständlich können auch beliebige Mischungen dieser beiden Komponenten eingesetzt werden. Für das Aminderivat sind solche Verbindungen bevorzugt, die ausgewählt sind aus der Gruppe bestehend aus Alkylendiamintetra-carboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxlat, insbesondere Ethylendiamintetraacetat, alkoxyliertes, insbesondere propoxyliertes, Tetraalkylalkylendiamin, insbesondere Tetraalkylethylendiamin, Tetrahydroxyalkylalkylendiamin, insbesondere N,N,N',N-Te-trakis-(2-hydroxypropyl)-ethylendiamin, alkoxyliertem, insbesondere ethoxyliertem oder propoxylier-tem, (N,N')-Tetraalkylalkylendiamin, insbesondere (N,N')-Tetraalkylethylendiamin, und beliebigen Mischungen hiervon. Besonders bevorzugt kommen als Wasserglas-Stabilisatoren alkoxyliertes, insbesondere propoxyliertes, Tetraalkylalkylendiamin, insbesondere Tetraalkylethylendiamin, Tetrahydroxyalkylalkylendiamin, insbesondere N,N,N',N-Te-trakis-(2-hydroxypropyl)-ethylendiamin, alkoxyliertem, insbesondere ethoxyliertem oder propoxylier-tem, (N,N')-Tetraalkylalkylendiamin, insbesondere (N,N')-Tetraalkylethylendiamin, zum Einsatz.

Die Komponente m) liegt in den erfindungsgemäßen wässrigen Dispersionbeschichtungsstoffen zweckmäßigerweise im Bereich von 0 bis 4 Gew.-%, vorzugsweise 0,05 bis 2 Gew.-% und besonders bevorzugt 0,1 bis 1 Gew.-% vor.

Die erfindungsgemäßen wässrigen Dispersionsbeschichtungsstoffe verfügen in bevorzugten Ausführungsformen über einen pH-Wert größer oder gleich 9,0, vorzugsweise im Bereich von 10,0 bis 12,0 und besonders bevorzugt im Bereich von 10,5 bis 12,0 oder 10,5 bis 11,5, oder sind auf einen pH-Wert größer oder gleich 9,0, vorzugsweise im Bereich von 10,0 bis 12,0 und besonders bevorzugt im Bereich von 10,5 bis 12,0 oder 10,5 bis 11,5 eingestellt.

Als Komponente l) wird bevorzugt zurückgegriffen auf amorphe Polyphosphate, insbesondere Natriumpolyphosphat, z.B. Natriumhexametaphosphat, Die Komponente l) liegt in den erfindungsgemäßen wässrigen Dispersionbeschichtungsstoffen zweckmäßigerweise im Bereich von o bis 2,0 Gew.-%, vorzugsweise 0,05 bis 1 Gew.-% und besonders bevorzugt 0,1 bis 0,8 Gew.-% vor.

Als Komponente o) wird bevorzugt zurückgegriffen auf Oberflächenadditive, insbesondere Silikonoberflächenadditive, beispielsweise polyethermodifizierte Siloxane, wie polyethermodifiziertes Polymethylalkylsiloxan, oder Silikonpolyether-Copolymere, Die Komponente o) liegt in den erfindungsgemäßen wässrigen Dispersionbeschichtungsstoffen zweckmäßigerweise im Bereich von o bis 8 Gew.-%, vorzugsweise 0,05 bis 6 Gew.-% und besonders bevorzugt 0,5 bis 4 Gew.-%, an Komponente o)
Geeignete Nasshaftungspromotoren können bevorzugt ausgewählt werden aus der Gruppe bestehend aus metallorganischen Verbindungen, insbesondere Titanaten und/oder Zirkonaten, Phosphorsäureestern, Silikonen und Copolymeren, insbesondere Copolymeren auf Basis von (Meth)acrylaten, enthaltend einpolymerisierte amino-, harnstoff- und/oder ureidofunktionalisierte ethylenisch ungesättigte Monomere, organofunktionellen Silanen, insbesondere silanisierte Reinacrylate, Polyalkylenpolyamine, insbesondere Polyethylenimine, und beliebigen Mischungen dieser Verbindngen. Hierbei kommen diese Nasshaftungspromotoren häufig als Bestandteil der Komponente a), insbesondere der Komponente a2) und/oder a3), besonders bevorzugt der Komponente a2) sowie insbesondere der Komponente a2) und nicht der Komponente a1) und/oder a3), bevorzugt nicht der Komponente a1) und a3), zum Einsatz. Sofern die Komponente a2) nicht in dem erfindungsgemäßen Dispersionsbeschichtungsstoff zugegen ist, können die Nasshaftungspromotoren auch als Bestandteil der Komponente a1) und/oder a3), insbesondere a1) in dem erfindungsgemäßen Dispersionsbeschichtungsstoff vorliegen bzw. zu diesem zugegeben werden. Und sofern die Komponenten a2) und a3) nicht in dem erfindungsgemäßen Dispersionsbeschichtungsstoff zugegen sind, können die Nasshaftungspromotoren auch als Bestandteil der Komponente a1) in dem erfindungsgemäßen Dispersionsbeschichtungsstoff vorliegen bzw. zu diesem zugegeben werden Nasshaftungspromotoren können zusätzlich oder alternativ auch separat, d.h. nicht als Bestandteil der Komponente a), zu dem erfindungsgemäßen wässrigen Dispersionsbeschichtungsstoff gegeben werden bzw. Bestandteil hiervon sein.

Die Menge an Nasshaftungspromotoren in den erfindungsgemäßen Dispersionsbeschichtungsstoffen liegt regelmäßig, bezogen auf die Komponente a), bevorzugt auf die Komponente a2), im Bereich von 0 bis 4,0 Gew.-%, vorzugsweise im Bereich von 0,1 bis 3,0 Gew.-% und besonders bevorzugt im Bereich von 0,4 bis 2,5 Gew.-%,
Es hat sich als besonders vorteilhaft herausgestellt, dass die erfindungsgemäßen Dispersionsbeschichtungsstoffe im Wesentlichen frei von Topfkonservierungsmitteln, vorzugsweise frei von Topf- und Filmkonservierungsmitteln, und besonders bevorzugt frei von Konservierungsmitteln, eingesetzt werden können und gleichwohl keine ausgeprägte Tendenz zur Schimmel- und/oder Algenbildung zeigen. Die erfindungsgemäßen Dispersionsbeschichtungsstoffe werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) als konservierungsmittel-frei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf CIT (5-Chlor-2-methyl-4-iso-thiazolin) in einer Menge kleiner 0,5 ppm enthalten sind.

In besonders zweckmäßigen Ausgestaltungen enthalten die wässrigen Dispersionsbeschichtungsstoffe
5 bis 40 Gew.-%, vorzugsweise 8 bis 35 Gew.-%, besonders bevorzugt 10 bis 30 Gew.-% und insbesondere 15 bis 25 Gew.-%, an Komponente a),
0,1 bis 9 Gew.-%, vorzugsweise 0,3 bis 4 Gew.-% und besonders bevorzugt 0,5 bis 2 Gew.-%, an Komponente b),
5 bis 40 Gew.-%, vorzugsweise 10 bis 38 Gew.-% und besonders bevorzugt 15 bis 35 Gew.-%, an Komponente c),
0,05 bis 2.0 Gew.-%, vorzugsweise 0,1bis 1,8 Gew.-% und besonders bevorzugt 0,4 bis 1,4 Gew.-%, an Komponente d),
0,05 bis 1,5 Gew.-%, vorzugsweise 0,1 bis 1,2Gew.-% und besonders bevorzugt 0,15 bis 1,0 Gew.-%, an Komponente e),
0,01 bis 2,5 Gew.-%, vorzugsweise 0,1 bis 2 Gew.-% und besonders bevorzugt 0,3 bis 1,5 Gew.-%, an Komponente f),
0 bis 5 Gew.-%, vorzugsweise 0,05 bis 3 Gew.-% und besonders bevorzugt 0,1 bis 1 Gew.-%, an Komponente g),
0 bis 1,0 Gew.-%, vorzugsweise 0,05bis0,7 Gew.-% und besonders bevorzugt 0,1bis 0,5 Gew.-%, an Komponente h),
0 bis 2,0 Gew.-%, vorzugsweise 0,05 bis 1,5 Gew.-% und besonders bevorzugt 0,1 bis 1 Gew.-%, an Komponente i),
0 bis 40 Gew.-%, vorzugsweise 1 bis 35 Gew.-% und besonders bevorzugt 5 bis 30 Gew.-%, an Komponente j),
0 bis 10 Gew.-%, vorzugsweise 0,1 bis 8 Gew.-% und besonders bevorzugt 1 bis 5 Gew.-%, an Komponente k),
0 bis 2,0 Gew.-%, vorzugsweise 0,05 bis 1 Gew.-% und besonders bevorzugt 0,1 bis 0,8 Gew.-%, an Komponente 1),
0 bis 4 Gew.-%, vorzugsweise 0,05 bis 2 Gew.-% und besonders bevorzugt 0,1 bis 1 Gew.-%, an Komponente m),
0 bis 10 Gew.-%, vorzugsweise 0,05 bis 5 Gew.-% und besonders bevorzugt 0,5 bis 1,5 Gew.-%, an Komponente n),
0 bis 8 Gew.-%, vorzugsweise 0,05 bis 6 Gew.-% und besonders bevorzugt 0,5 bis 4 Gew.-%, an Komponente o)
0 bis 2,0 Gew.-%, vorzugsweise 0,01 bis 1,5 Gew.-% und besonders bevorzugt 0,04 bis 1,0 Gew.-%, an Komponente p) und/oder, insbesondere und,
10 bis 60 Gew.-%, vorzugsweise 15 bis 50 Gew.-% und besonders bevorzugt 20 bis 40 Gew.-%, Wasser, jeweils bezogen auf das Gesamtgewicht des wässrigen Dispersionsbeschichtungsstoffes, wobei die den wässrigen Dispersionsbeschichtungsstoff bildenden Komponenten sich stets zu 100 Gew.-% ergänzen.

Die erfindungsgemäßen wässrigen Dispersionsbeschichtungsstoffe eignen sich insbesondere auch als Fassadenbeschichtungsstoffe, d. h. für die Beschichtung von Außenfassaden.

Die der Erfindung zugrunde liegende Aufgabe wird ebenfalls gelöst durch eine Beschichtung, erhalten oder erhältlich mit dem erfindungsgemäßen wässrigen Dispersionsbeschichtungsstoff. Diese Beschichtung stellt vorzugsweise eine Fassadenbeschichtung dar.

Überraschend hat sich gezeigt, dass die erfindungsgemäßen Beschichtungen in bevorzugten Ausgestaltungen sich durch einen W-Wert (Wasserdurchlässigkeitsrate) nach DIN-EN 1062-3:2008-04 kleiner 0,51 kg/m²xh^{0,5}, vorzugsweise kleiner 0,2 1 kg/m²xh^{0,5} und besonders bevorzugt kleiner als 0,1 kg/m²xh^{0,5}, was eine W₃-Klassifizierung ermöglicht, und/oder, insbesondere und, einen sD-Wert (Wasserdampfdurchlässigkeit) (bestimmt nach DIN EN 7783-2:2012-02) kleiner 1,5 m, bevorzugt kleiner 1,4 m (was eine V2-Klassifizierung ermöglicht), besonders bevorzugt kleiner 0,5 m und insbesondere kleiner oder gleich 0,14 m (was eine V1-Klassifizierung ermöglicht), auszeichnen.

Mit den erfindungsgemäßen wässrigen Dispersionsbeschichtungsstoffen lassen sich vielfältige beschichtete Substrate erhalten. Insbesondere eignen sich die erfindungsgemäßen wässrigen Dispersionsbeschichtungsstoffe für die Beschichtung bzw. Renovierung von Gebäudefassaden.

Die der Erfindung zugrunde liegende Aufgabe wird des Weiteren gelöst durch ein Verfahren zur Beschichtung von Substratoberflächen, insbesondere von Gebäudefassaden, umfassend die Schritte
i) Zurverfügungstellung eines erfindungsgemäßen wässrigen Dispersionsbeschichtungsstoffs,
ii) Zurverfügungstellung eines Substrats mit einer beschichtbaren Oberfläche und
iii) Beaufschlagen der beschichtbaren Oberfläche des Substrats mit dem wässrigen Dispersionsbeschichtungsstoff.

Der erfindungsgemäße wässrige Dispersionsbeschichtungsstoff kann hierbei sogar mittels eines Airless-Spritzgeräts auf die beschichtbare Oberfläche des Substrats aufgebracht werden.

Der vorliegenden Erfindung liegt die überraschende Erkenntnis zugrunde, dass sich mit den erfindungsgemäßen wässrigen Dispersionsbeschichtungsstoffen Beschichtungen erhalten lassen, die besonders schmutzresistent sind, und zwar insbesondere auch bei weißen und hellfarbigen Beschichtungen. Darüber hinaus hat sich überraschend gezeigt, dass die mit den erfindungsgemäßen wässrigen Dispersionsbeschichtungsstoffen erhaltenen Beschichtungen sich durch eine hohe Farbtonbeständigkeit, insbesondere auch bei dunklen Farbtönen auszeichnen. Außerdem sind diese Beschichtungen regelmäßig sehr kratzfest. Als besonders vorteilhaft hat sich auch herausgestellt, dass die erfindungsgemäßen wässrigen Dispersionsbeschichtungsstoffe sowie insbesondere auch die hieraus erhaltenen Beschichtungen eine ausgeprägt geringe Tendenz zum Algen- und/oder Pilzbefall zeigen, und zwar ohne auf herkömmliche Topfkonservierungsmittel angewiesen zu sein. Von besonderem Vorteil ist ebenfalls, dass die erfindungsgemäßen Beschichtungen, insbesondere wenn auf zementhaltigen Untergründen, und zwar selbst auf frischen zementhaltigen Untergründen, nicht zum sogenannten Ausblühen neigen.

Für die erfindungsgemäßen Beschichtungen hat sich zudem überraschend gezeigt, dass sie einen optimierten Wasserhaushalt ermöglichen und sich durch eine gute Wasserdurchlässigkeitsrate, d.h. eine möglichst geringe Wasserdurchlässigkeit, und/oder, insbesondere und, eine gute Wasserdampfdurchlässigkeit, d.h. ein hohes Vermögen zur Durchlässigkeit von Wasserdampf auszeichnen. Hierdurch gelingt regelmäßig eine beschleunigte Rücktrocknung. Demgemäß dringt einerseits (flüssiges) Wasser durch die erfindungsgemäßen Beschichtungen nur schlecht in Fassaden ein und hält diese demgemäß möglichst lange trocken, andererseits ermöglichen die erfindungsgemäßen Beschichtungen durch deren gute Wasserdampfdurchlässigkeit das Austrocknen von Feuchtigkeit enthaltenden Fassaden und tragen so zu einer langlebigen Fassade bei.

Mit den erfindungsgemäßen Beschichtungen ist demgemäß ein optimierter Schutz von Substratoberflächen, insbesondere von Gebäudefassaden möglich. Ohne an eine besondere Theorie gebunden zu sein, wird momentan gemutmaßt, dass die Kombination an Bindemitteln, Wasserglas, Leichtfüllstoffen und silikatischen Füllstoffen mit mindestens bimodaler Verteilung hierzu beitragen dürfte.

### Beispiel:

Ein erfindungsgemäßer wässriger Dispersionsbeschichtungsstoff wurde auf für den Fachmann bekannte Weise zusammen gegeben und dispergiert. Dieser Dispersionsbeschichtungsstoff verfügte über einen pH-Wert im Bereich von 11,0 bis 11,5 und besaß die folgende Zusammensetzung:

| | |
|---|---|
| 36,835 Gew.-% | Wasser |
| 7,68 Gew.-% | organisches Bindemittel (a2)) |
| 4,5 Gew.-% | Bindemittel (a1)) |
| 1,1 Gew.-% | Wasserglas (b)) |
| 1,08 Gew.-% | Siliconharz (a3)) |
| 1,8 Gew.-% | Pigment (j)) |
| 2,0 Gew.-% | kalziniertes Kaolin (c)); D50 = 8,0 µm |
| 16,0 Gew.-% | Feldspat (c)); D50 = 15 µm |
| 2,0 Gew.-% | Glimmer (c)); D50 = 48 µm |
| 4,0 Gew.-% | Perlite (c)); D50 = 30 µm |
| 19,5 Gew.-% | Titandioxid (j)) |
| 0,6 Gew.-% | Kaliummethylsiliconat (d)) |
| 0,55 Gew.-% | Hydrophobierungsmittel (f)) |
| 1,0 Gew.-% | organisches Lösemittel (n)) |
| 0,7 Gew.-% | Verdicker (e)) |
| 0,35 Gew.-% | Netzmittel (i)) |
| 0,35 Gew.-% | Entschäumer (g)) |

Die silikatischen Füllstoffe c) verfügten jeweils über eine monomodale Teilchengrößenverteilung. Mit dem geschilderten Beschichtungsstoff wurde eine Beschichtung auf einer Außenfassade erhalten, die über eine optimierte Schutzfunktion verfügte. Sie zeichnete sich durch eine sehr geringe Wasserdurchlässigkeitsrate bei gleichzeitig sehr hoher Wasserdampfdurchlässigkeit aus.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässriger Dispersionsbeschichtungsstoff, insbesondere wässriger Fassadenbeschichtungsstoff, gebildet aus oder enthaltend
a) ein erstes Bindemittel a1) in Form einer wässrigen (Meth)acrylat-Homopolymer/Siliciumdioxid-Hybrid-Dispersion oder einer wässrigen (Meth)acrylat-Copolymer/Siliciumdioxid-Hybrid-Dispersion oder einer wässrigen (Meth)acrylat/(Meth)acrylsäure-Copolymer/Siliciumdioxid-Hybrid-Dispersion oder einer wässrigen Organosilikat-Hybridbindemittel-Dispersion
und gegebenenfalls
mindestens ein zweites Bindemittel a2) in Form einer wässrigen Dispersion, enthaltend (Meth)acrylat-Homopolymere oder enthaltend (Meth)acrylatCopolymere oder enthaltend Vinylacetat/Ethylen-Copolymere oder enthaltend Vinylaromat/Acrylat-Copolymere,
und/oder
mindestens ein drittes Bindemittel a3) bestehend aus oder umfassend Acrylharze, Acrylsilikonharze, Silikonharze, Urethanharze, ungesättigte Polyesterharze oder Alkydharze,
b) Wasserglas und/oder Kieselsol, insbesondere Wasserglas,
c) silikatischen Füllstoff mit mindestens bimodaler Partikelgrößenverteilung,
d) mindestens ein Alkylalkoxysilan, Alkylalkoxysiloxan, wasserlöslichen Alkylsilikonat, insbesondere Kaliummethylsilikonat, Monoalkylsilantriol, Dialkylsilandiol, Trialkylsilanol, Alkalisalz von Monoalkylsilantriol, insbesondere Kaliummethylsilantriolat und/oder Kaliumethylsilantriolat, Dialkylsilandiol, Trialkylsilanol oder beliebigen Mischungen hiervon und
e) mindestens einen Verdicker,
f) mindestens ein Hydrophobierungsmittel und
g) gegebenenfalls mindestens ein Additiv
wobei der wässrige Dispersionsbeschichtungsstoff einen pH-Wert im Bereich von 8,5 bis 12 aufweist oder auf einen pH-Wert im Bereich von 8,5 bis 12 eingestellt ist.

2. Dispersionsbeschichtungsstoff nach Anspruch 1, ferner umfassend
h) mindestens ein pH-Wert-Einstellmittel,
i) mindestens ein Netz- und/oder Dispergiermittel,
j) Pigmente, insbesondere in Form einer Pigmentpaste,
k) nicht-silikatische Füllstoffe,
l) amorphe Polyphosphate, bevorzugt Natriumpolyphosphat wie Natriumhexametaphosphat,
m) Wasserglas-Stabilisatoren,
n) ein Lösemittel,
o) Oberflächenadditive, insbesondere Silikonoberflächenadditive, beispielsweise polyethermodifizierte Siloxane, wie polyethermodifiziertes Polymethylalkylsiloxan, oder Silikonpolyether-Copolymere und/oder
p) mindestens einen Nasshaftungspromotor.

3. Wässriger Dispersionsbeschichtungsstoff nach Anspruch 1 oder 2, **dadurch gekennzeichnet, dass**
die Komponente d) das wasserlösliche Alkylsilikonat, insbesondere Kaliummethylsilikonat, darstellt oder umfasst.

4. Wässriger Dispersionsbeschichtungsstoff nach einem der vorangehenden Ansprüche, **dadurch gekennzeichnet, dass**
der silikatische Füllstoff c) ausgewählt ist aus der Gruppe bestehend aus Glimmer, insbesondere Muskovitglimmer, Talk, Wollastonit, Kaolin, insbesondere kalziniertes Kaolin, Feldspaten, silikatischen Leichfüllstoffen und deren beliebigen Mischungen, insbesondere Feldspat, Muskovit und/oder Kaolin.

5. Wässriger Dispersionbeschichtungsstoff nach einem der Ansprüche 2 bis 4, **dadurch gekennzeichnet, dass**
der Dispersionsbeschichtungsstoff als nicht-silikatische Füllstoffe carbonatische Füllstoffe in einer Menge kleiner 5,0 Gew.-%, bezogen auf das Gesamtgewicht des Dispersionbeschichtungsstoffes, enthält oder dass der Dispersionsbeschichtungsstoff im Wesentlichen frei von carbonatischen Füllstoffen ist.

6. Wässriger Dispersionsbeschichtungsstoff nach Anspruch 4 oder 5, **dadurch gekennzeichnet, dass**
die Leichtfüllstoffe ausgewählt sind aus der Gruppe bestehend aus Glasbubbles, Blähglas, z.B. Blähglasgranulat; geblähten vulkanischen Gesteinen, insbesondere Perlite, z.B. hydrophobierte oder expandierte Perlite, insbesondere hydrophobierte expandierte Perlite; Blähton; Blähschiefer; Glasbeton; Schaumglas; porösem Vulkangestein, insbesondere Bims; Flugasche; Kesselsand; geblähtem Vermiculit; silikatischen Mikrohohlkugeln, insbesondere Alumosilikathohlkugeln; Aluminiumsilikaten, insbesondere expandierten Aluminiumsilikaten und/oder amorphen Aluminiumsilikaten; Calciumsilikathydraten; Schichtsilikaten und beliebigen Mischungen hiervon.

7. Wässriger Dispersionsbeschichtungsstoff nach einem der vorangehenden Ansprüche, **dadurch gekennzeichnet, dass**
das erste Bindemittel a1) eine wässrige Acrylat-Copolymer/Siliciumdioxid-Hybrid-Dispersion oder eine Methacrylat/Acrylsäure-Copolymer/Siliciumdioxid-Hybrid-Dispersion umfasst oder hieraus besteht und/oder dass
das zweite Bindemittel a2) eine wässrige Dispersion, enthaltend AcrylatCopolymere, umfasst oder hieraus besteht und/oder dass das dritte Bindemittel a3) Silikonharze umfasst oder hieraus besteht.

8. Wässriger Dispersionsbeschichtungsstoff nach einem der vorangehenden Ansprüche, **dadurch gekennzeichnet, dass**
das Hydrophobierungsmittel mit Aminoalkylgruppen derivatisierte Polydialkylsiloxane umfasst.

9. Wässriger Dispersionsbeschichtungsstoff nach einem der vorangehenden Ansprüche, **dadurch gekennzeichnet, dass**
das Wasserglas Kalium-Wasserglas oder Lithium-Wasserglas darstellt oder umfasst, besonders bevorzugt Lithium-Wasserglas darstellt oder umfasst.

10. Wässriger Dispersionsbeschichtungsstoff nach einem der vorangehenden Ansprüche, **dadurch gekennzeichnet, dass**
in den wässrigen (Meth)acrylat-Homopolymer/Siliciumdioxid-, (Meth)acrylat-Copolymer/Siliciumdioxid- oder (Meth)acrylat/(Meth)acrylsäureCopolymer/Siliciumdioxid-Hybrid-Dispersionen (Meth)acrylat-Homopolymer/Siliciumdioxid-, (Meth)acrylat-Copolymer/Siliciumdioxid- bzw. (Meth)acrylat/(Meth)acrylsäure-Copolymer/Siliciumdioxid-Hybrid-Partikel mit einer durchschnittlichen, insbesondere einer absoluten, Partikelgröße kleiner 1 µm vorliegen.

11. Wässriger Dispersionsbeschichtungsstoff nach einem der vorangehenden Ansprüche, **dadurch gekennzeichnet, dass**
der Anteil des ersten Bindemittels a1) (Feststoffanteil), bezogen auf die Gesamtmenge an Bindemitteln gemäß Komponente a) (Feststoffanteil), im Bereich von 1 bis 15 Gew.-%, bevorzugt im Bereich von 2,5 bis 10 Gew.-%, liegt und/oder dass der Anteil des zweiten Bindemittels a2) (Feststoffanteil), bezogen auf die Gesamtmenge an Bindemitteln gemäß Komponente a) (Feststoffanteil), im Bereich von 2 bis 20 Gew.-%, bevorzugt im Bereich von 2 bis 15 Gew.-%, liegt und/oder dass der Anteil des dritten Bindemittels a3) (Feststoffanteil), bezogen auf die Gesamtmenge an Bindemitteln gemäß Komponente a) (Feststoffanteil), im Bereich von 0,1 bis 5 Gew.-%, bevorzugt im Bereich von 0,5 bis 2,5 Gew.-%, liegt.

12. Wässriger Dispersionsbeschichtungsstoff nach einem der vorangehenden Ansprüche, **dadurch gekennzeichnet, dass**
die Gesamtmenge an Bindemitteln gemäß Komponente a) (Feststoffanteil), im Bereich von 5 bis 25 Gew.-%, bevorzugt im Bereich von 10 bis 20 Gew.-%, liegt.

13. Wässriger Dispersionsbeschichtungsstoff nach einem der Ansprüche 2 bis 12,
**dadurch gekennzeichnet, dass**
das pH-Wert-Einstellmittel h) ausgewählt ist aus der Gruppe bestehend aus Alkalihydroxiden, Erdalkalihydroxiden, Ammoniak, Aminverbindungen und beliebigen Mischungen hiervon, wobei Alkalihydroxide, insbesondere Kaliumhydroxid, bevorzugt sind.

14. Wässriger Dispersionsbeschichtungsstoff nach einem der Ansprüche 2 bis 13,
**dadurch gekennzeichnet, dass**
der Wasserglas-Stabilisator eine quartäre Ammoniumverbindung und/oder ein Aminderivat umfasst oder darstellt, wobei
das Aminderivat bevorzugt ausgewählt ist aus der Gruppe bestehend aus Alkylendiamintetra-carboxylsäure, insbesondere Ethylendiamintetraessigsäure, Salzen der Alkylendiamintetracarboxylsäure, insbesondere Salzen der Ethylendiamintetraessigsäure, Alkylendiamintetracarboxylat, insbesondere Ethylendiamintetraacetat, alkoxyliertes, insbesondere propoxyliertes Tetraalkylalkylendiamin, insbesondere Tetraalkylethylendiamin, Tetrahydroxyalkylalkylendiamin, insbesondere N,N,N',N-Tetrakis-(2-hydroxypropyl)-ethylendiamin, alkoxyliertem, insbesondere ethoxyliertem oder propoxyliertem, (N,N')-Tetraalkylalkylendiamin, insbesondere (N,N')-Tetraalkylethylendiamin, und beliebigen Mischungen hiervon.

15. Wässriger Dispersionsbeschichtungsstoff nach einem der vorangehenden Ansprüche, **dadurch gekennzeichnet, dass**
dessen pH-Wert größer oder gleich 9,0, vorzugsweise im Bereich von 10,0 bis 12,0 und besonders bevorzugt im Bereich von 10,5 bis 12,0, ist oder auf einen pH-Wert größer oder gleich 9,0, vorzugsweise im Bereich von 10,0 bis 12,0 und besonders bevorzugt im Bereich von 10,5 bis 12,0 eingestellt ist.

16. Wässriger Dispersionsbeschichtungsstoff nach einem der vorangehenden Ansprüche, **dadurch gekennzeichnet, dass**
diese im Wesentlichen frei von Topfkonservierungsmitteln, vorzugsweise frei von Topf- und Filmkonservierungsmitteln, und besonders bevorzugt frei von Konservierungsmitteln ist.

17. Wässriger Dispersionsbeschichtungsstoff nach einem der vorangehenden Ansprüche, **dadurch gekennzeichnet, dass**
der silikatische Füllstoff mit mindestens bimodaler Partikelgrößenverteilung mindestens ein erstes lokales Partikelgrößenmaximum im Bereich von 1 µm bis kleiner 22 µm, bevorzugt im Bereich von 2 µm bis 20 µm und besonders bevorzugt im Bereich von 5 µm bis 18 µm sowie mindestens ein zweites lokales Partikelgrößenmaximum im Bereich von 22 µm bis 100 µm, bevorzugt im Bereich von 25 µm bis 75 µm und besonders bevorzugt im Bereich von 28 µm bis 60 µm aufweist.

18. Wässriger Dispersionsbeschichtungsstoff nach einem der vorangehenden Ansprüche, enthaltend
5 bis 40 Gew.-%, vorzugsweise 8 bis 35 Gew.-% und besonders bevorzugt 10 bis 25 Gew.-%, an Komponente a),
0,1 bis 9 Gew.-%, vorzugsweise 0,3 bis 4 Gew.-% und besonders bevorzugt 0,5 bis 2 Gew.-%, an Komponente b),
5 bis 40 Gew.-%, vorzugsweise 10 bis 38 Gew.-% und besonders bevorzugt 15 bis 35 Gew.-%, an Komponente c),
0,05 bis 2.0 Gew.-%, vorzugsweise 0,1 bis 1,8 Gew.-% und besonders bevorzugt 0,4 bis 1,4 Gew.-%, an Komponente d),
0,05 bis 1,5 Gew.-%, vorzugsweise 0,1 bis 1,2 Gew.-% und besonders bevorzugt 0,15 bis 1,0 Gew.-%, an Komponente e),
0,01 bis 2,5 Gew.-%, vorzugsweise 0,1 bis 2 Gew.-% und besonders bevorzugt 0,3 bis 1,5 Gew.-%, an Komponente f),
o bis 5 Gew.-%, vorzugsweise 0,05 bis 3 Gew.-% und besonders bevorzugt 0,1 bis 1 Gew.-%, an Komponente g),
0 bis 1,0 Gew.-%, vorzugsweise 0,05 bis 0,7 Gew.-% und besonders bevorzugt 0,1bis 0,5 Gew.-%, an Komponente h),
0 bis 2,0 Gew.-%, vorzugsweise 0,05 bis 1,5 Gew.-% und besonders bevorzugt 0,1 bis 1,0 Gew.-%, an Komponente i),
0 bis 40 Gew.-%, vorzugsweise 1 bis 35 Gew.-% und besonders bevorzugt 5 bis 30 Gew.-%, an Komponente j),
0 bis 10 Gew.-%, vorzugsweise 0,1 bis 8 Gew.-% und besonders bevorzugt 1 bis 5 Gew.-%, an Komponente k),
0 bis 2,0 Gew.-%, vorzugsweise 0,05 bis 1 Gew.-% und besonders bevorzugt 0,1 bis 0,8 Gew.-%, an Komponentel),
0 bis 4 Gew.-%, vorzugsweise 0,05 bis 2 Gew.-% und besonders bevorzugt 0,1 bis 1 Gew.-%, an Komponente m),
o bis 10 Gew.-%, vorzugsweise 0,05 bis 5 Gew.-% und besonders bevorzugt 0,5 bis 1,5 Gew.-%, an Komponente n),
0 bis 8 Gew.-%, vorzugsweise 0,05 bis 6 Gew.-% und besonders bevorzugt 0,5 bis 4 Gew.-%, an Komponente o),
0 bis 2,0 Gew.-%, vorzugsweise 0,01 bis 1,5 Gew.-% und besonders bevorzugt 0,04 bis 1,0 Gew.-% und/oder
15 bis 60 Gew.-%, insbesondere 10 bis 20 Gew.-% Wasser,
jeweils bezogen auf das Gesamtgewicht des wässrigen Dispersionsbeschichtungsstoffes, wobei die den wässrigen Dispersionsbeschichtungsstoff bildenden Komponenten sich stets zu 100 Gew.-% ergänzen.

19. Wässriger Dispersionsbeschichtungsstoff nach einem der Ansprüche 2 bis 18,
**dadurch gekennzeichnet, dass**
die Nasshaftungspromotoren ausgewählt sind aus der Gruppe bestehend aus metallorganischen Verbindungen, insbesondere Titanaten und/oder Zirkonaten, Phosphorsäureestern, Silikonen und Copolymeren, insbesondere Copolymeren auf Basis von (Meth)acrylaten, enthaltend einpolymerisierte amino-, harnstoff- und/oder ureidofunktionalisierte ethylenisch ungesättigte Monomere, organofunktionellen Silanen, insbesondere silanisierte Reinacrylate, Polyalkylenpolyamine, insbesondere Polyethylenimine, und beliebigen Mischungen dieser Verbindngen.

20. Wässriger Dispersionsbeschichtungsstoff nach einem der Ansprüche 2 bis 19,
**dadurch gekennzeichnet, dass**
der Nasshaftungspromotor Bestandteil der Komponente a), bevorzugt der Komponente a2) und/oder a3), besonders bevorzugt der Komponente a2) sowie insbesondere der Komponente a2) und nicht der Komponente a1), ist.

21. Beschichtung, insbesondere Fassadenbeschichtung, erhalten oder erhältlich mit dem wässrigen Dispersionsbeschichtungsstoff nach einem der vorangehenden Ansprüche.

22. Beschichtung nach Anspruch 21, **dadurch gekennzeichnet, dass** diese einen W-Wert (Wasserdurchlässigkeitsrate) nach DIN-EN 1062-3 kleiner als 0,1 kg/m²xh^{0,5} (W3) und/oder einen sD-Wert (Wasserdampfdurchlässigkeit) < 1,4 m (V2), insbesondere ≤ 0,14 m (V1) aufweist.

23. Beschichtetes Substrat, insbesondere beschichtete Fassade, erhalten durch Behandeln eines Substrats mit dem wässrigen Dispersionsbeschichtungsstoff nach einem der Ansprüche 1 bis 20.

24. Verwendung des wässrigen Dispersionsbeschichtungsstoffs nach einem der Ansprüche 1 bis 20 für die Beschichtung von Substratoberflächen, insbesondere von Gebäudefassaden, und/oder für die Renovierung von Gebäudefassaden.

25. Verfahren zur Beschichtung von Substratoberflächen, insbesondere von Gebäudefassaden, umfassend die Schritte
i) Zurverfügungstellung eines wässrigen Dispersionsbeschichtungsstoffs nach einem der Ansprüche 1 bis 20,
ii) Zurverfügungstellung eines Substrats mit einer beschichtbaren Oberfläche und
iii) Beaufschlagen der beschichtbaren Oberfläche des Substrats mit dem wässrigen Dispersionsbeschichtungsstoff.

26. Verfahren nach Anspruch 25, **dadurch gekennzeichnet, dass** der wässrige Dispersionsbeschichtungsstoff mittels eines Airless-Spritzgeräts auf die beschichtbare Oberfläche des Substrats aufgebracht wird.
